# EUROPEAN PATENT APPLICATION

(11) **EP 4 542 356 A1**
(43) Date of publication of application: **23.04.2025**
(21) Application number: 24204220.8
(22) Date of filing: 02.10.2024
(51) Int. Cl.: G06F 3/0482, G06F 3/04842, G06F 3/04847, G06F 15/02, G06T 11/20

(54) **ELECTRONIC DEVICE, DISPLAY CONTROL METHOD, AND PROGRAM**

(30) Priority: 18.10.2023 JP 2023179391
(71) Applicant: CASIO COMPUTER CO., LTD., Tokyo 151-8543 (JP)
(72) Inventor: Tashiro, Saki, Hamura-shi, Tokyo, 205-8555 (JP); Murakami, Chinari, Hamura-shi, Tokyo, 205-8555 (JP); Tanaka, Toshiaki, Hamura-shi, Tokyo, 205-8555 (JP)
(74) Representative: Grünecker Patent- und Rechtsanwälte PartG mbB

(57) **Abstract**

Provided is an electronic device (1) including a controller (11). The controller displays on a display (15) a function alongside with an indicator (40) that includes a line segment (41) of a line type same as a line type of a graph (G1, G2) drawn based on the function.

## Description

### TECHNICAL FIELD

The present disclosure relates to an electronic device, a display control method, and a program.

### DESCRIPTION OF THE RELATED ART

JPH11184821A discloses an electronic device such as a scientific calculator capable of drawing a graph representing a function registered by a user on a display unit. There are electronic devices that can set a line type of a drawn graph selected from several line types.

### SUMMARY OF INVENTION

According to an aspect of the present disclosure, provided is an electronic device including a controller,
wherein the controller displays on a display a function alongside with an indicator that includes a line segment of a line type same as a line type of a graph drawn based on the function.

### BRIEF DESCRIPTION OF THE DRAWINGS

The advantages and features provided by one or more embodiments of the disclosure will become more fully understood from the detailed description given hereinbelow and the appended drawings which are given by way of illustration only, and thus are not intended as a definition of the limits of the present disclosure, wherein:
Fig. 1 is a perspective view showing a configuration of a scientific calculator;
Fig. 2 is a block diagram showing a main functional configuration of the scientific calculator;
Fig. 3 shows a graph menu screen;
Fig. 4 shows a function setting menu screen;
Fig. 5 shows a line type setting screen;
Fig. 6 shows a line type indicator;
Fig. 7 shows an example of contents of function setting data;
Fig. 8 shows a graph drawing screen;
Fig. 9 shows a graph selection screen in a case where a first function f(x) and a second function g(x) are both inequalities;
Fig. 10 shows one example of the graph menu screen in a case where the second function g(x) is set as an unselected function;
Fig. 11 shows another example of the graph menu screen in a case where the second function g(x) is set as the unselected function;
Fig. 12 shows another example of the graph menu screen in a case where the second function g(x) is set as the unselected function;
Fig. 13 shows another example of the graph menu screen in a case where the second function g(x) is set as the unselected function; and
Fig. 14 is a flowchart showing a control procedure of graph drawing processing.

### DETAILED DESCRIPTION

Hereinafter, an embodiment of the present disclosure is described with reference to the drawings.

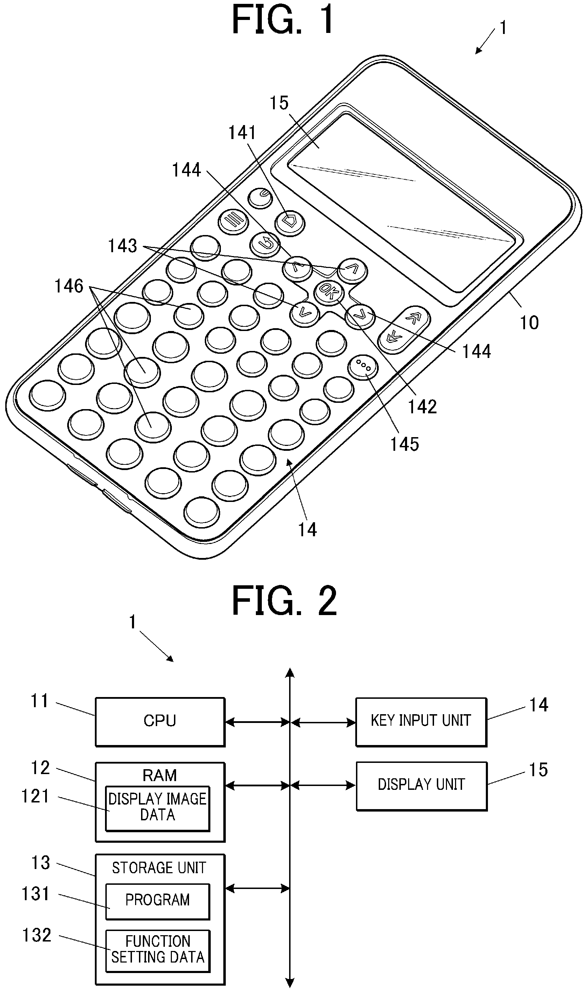

Fig. 1 is a perspective view showing a configuration of a scientific calculator 1. The scientific calculator 1 (electronic device) includes a case 10, a key input unit 14 mounted on the case 10, and a display unit 15. The scientific calculator 1 can display an input formula and a calculation result thereof on the display unit 15 according to a user operation on the key input unit 14. The scientific calculator 1 can display a graph(s) representing a function(s) registered by a user, information on an analysis result(s) for the registered graph (s), and the like on the display unit 15.

Fig. 2 is a block diagram showing a main functional configuration of the scientific calculator 1. The scientific calculator 1 includes, in addition to the key input unit 14 and the display unit 15 described above, a central processing unit (CPU) 11 as at least one processor, a random-access memory (RAM) 12, and a storage unit 13 as at least one memory such as a read only memory (ROM). The units of the scientific calculator 1 are connected to each other via a communication path such as a bus.

The CPU 11 is a processor that controls operations of the scientific calculator 1 by reading and executing a program 131 stored in the storage unit 13 to perform various kinds of arithmetic processing. The CPU 11 functions as a controller by executing the program 131 to execute various kinds of processing. For example, in a case where one or more of the keys on the key input unit 14 are pressed, the CPU 11 shows on the display unit 15 the pressed key(s) and shows a calculation result corresponding to the user operation, or the like, as well as executing processing corresponding to the function(s) assigned to the pressed key(s). The scientific calculator 1 may include multiple processors (for example, multiple CPUs), and the multiple processors may execute multiple kinds of processing executed by the CPU 11 of the present embodiment. In that case, the multiple processors constitute the controller. In that case, the multiple processors may be involved in common processing, or the multiple processors may respectively execute different kinds of processing independently in parallel.

The RAM 12 provides a memory space for working to the CPU 11 and stores temporary data. The RAM 12 temporarily stores display image data 121 generated by the CPU 11 for displaying images on the display unit 15, various calculation results by the CPU 11, and the like. These kinds of data may be stored in the storage unit 13.

The storage unit 13 is a non-transitory storage medium readable by the CPU 11 as a computer, and stores the program 131 and various kinds of data. The storage unit 13 includes a nonvolatile memory such as a flash memory. The program 131 is stored in the storage unit 13 in a form of a program code that can be read by the computer. Function setting data 132 on the setting of the functions registered by the user is stored in the storage unit 13. The contents of the function setting data 132 are described later.

The key input unit 14 includes multiple keys operated (pressed) by a user, as shown in Fig. 1. The multiple keys includes a home key 141 for showing a predetermined home screen on the display unit 15, an enter key 142 for inputting determination, up and down keys 143 for specifying up and down directions, left and right keys 144 for specifying left and right directions, a tool key 145 for calling various kinds of functions, or other various kinds of input keys 146. The various kinds of input keys 146 includes number keys, calculation keys for executing calculations such as addition, subtraction, multiplication, division, and the like, sign keys for inputting function signs such as "x" and "log," an AC key for clearing all results of calculations and the like done so far. In a case where each of the keys shown in Fig. 1 is operated, the key input unit 14 outputs operation information corresponding to the operated key to the CPU 11.

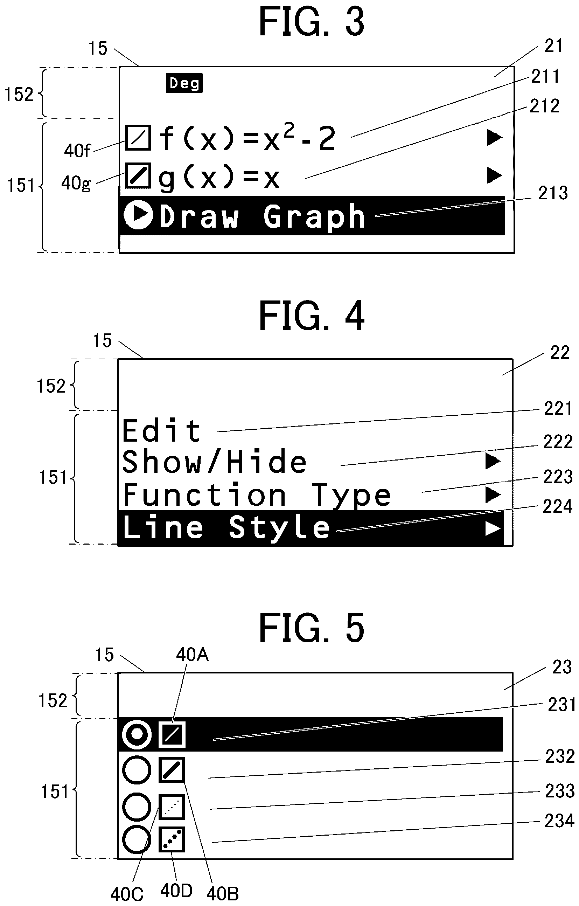

The display unit 15 includes a liquid crystal display and a driver circuit (not shown in the drawings) for driving the liquid crystal display, and performs various kinds of display according to a display control signal(s) and the display image data 121 output from the CPU 11 to the driver circuit. The liquid crystal display of the display unit 15 includes a band-shaped sub display area 152 at the top of the display (see Fig. 3) and a main display area 151 below the sub display area 152 (see Fig. 3). In the main display area 151, the display unit 15 controls a density of each of multiple pixels disposed in a matrix individually to perform display. Specifically, the main display area 151 includes pixel electrodes disposed in a matrix and common electrodes facing those pixel electrodes. The driver circuit selects the pixel electrodes with an active-matrix method under the control of the CPU 11 to apply voltages corresponding to the display densities of the pixels to the pixel electrodes. Through this, the driver circuit controls a direction of a liquid crystal molecule for each of the pixels in a liquid crystal layer between the pixel electrodes and the common electrodes to adjust the density of each of the pixels. The display unit 15 of the present embodiment can display four gradations of black, dark gray, light gray, and white for each of the pixels according to a voltage applied to the pixel electrodes. That is, the display unit 15 is a display capable of four-gradation grayscale display (in other words, four-gradation monochromatic display). The configuration and operation of the display unit 15 are not limited to those described above, and may perform gradation display by time division driving (multiplex driving) or the like. For example, in a passive matrix system such as STN, the density of each pixel may be adjusted by controlling the ratio of time during which a predetermined on-voltage is applied to each pixel. As an example, for one pixel, the pixel is displayed in black by setting the on-voltage application time to 15 msec in a predetermined cycle relating to the display operation, the pixel is displayed in dark gray by setting the on-voltage application time to 10 msec in the above cycle, the pixel is displayed in light gray by setting the on-voltage application time to 5 ms sec in the above cycle, and the pixel may also be displayed in white by setting the on-voltage application time to 0 ms sec in the above cycle. The number of the display gradations of the display unit 15 is not limited to four and may be three or five or more. The two gradations of black and white may be used if functions are not to be displayed in gray as described later. In the present embodiment, the pixel value (dot number) in the main display area 151 is 63 dots in the vertical direction and 192 dots in the horizontal direction. However, the dot number is not limited to this example, and may be changed appropriately. The display image data 121 includes 63 × 192 pieces of pixel data corresponding to the pixels of the main display area 151, and each piece of the pixel data includes a pixel value denoting a gradation to exhibit on the corresponding pixel.

The display unit 15 applies a voltage to a segment electrode formed in a shape of each of the indicators including characters and signs (that is, in a segment system) in the sub display area 152 to display the indicators.

The scientific calculator 1 may include a unit of configuration not shown in Fig. 2, for example, a communication unit that communicates with an external device, a storage medium reading unit that reads data of an external storage medium such as a USB memory.

Next, the operations of the scientific calculator 1 are described, centered around the display operation on the display unit 15.

In a case where the scientific calculator 1 is powered on or the home key 141 is operated, a home screen (not shown in the drawings) is shown on the display unit 15. Multiple icons representing multiple calculator apps are shown on the home screen. In a case where one of the icons is selected by a user operation, a calculator app corresponding to the selected icon is executed. The multiple calculator apps include a "basic calculation app" for performing regular calculations, a "statistics app" for performing statistical calculations and regression calculations, a "distribution app" for performing probability and distribution calculations, a "spreadsheet app" for performing spreadsheet calculations, a "graph app" for drawing and analyzing (solving) graphs representing functions, a "numerical table creation app" for creating numerical tables, and the like. The types of the calculator apps are not limited to these examples. Among these, on the "graph app," graphs representing two functions registered by a user beforehand (hereinafter referred to as a first function f(x) and a second function g(x)) are shown on the display unit 15 with x and y axes, and an analysis result and the like related to the graphs are shown on the display unit 15.

In a case where the graph app is executed by selection of the icon of the graph app, a graph menu screen 21 shown in Fig. 3 is shown on the display unit 15. On the graph menu screen 21, a "first function" item 211 for setting related to the first function f(x), a "second function" item 212 for setting related to the second function g(x), and a "draw-graph" item 213 for showing the graphs of the first function f(x) and the second function g(x) are shown as menu items in the main display area 151. The first function item 211 is shown including a formula of the first function f(x), and a line type indicator 40f displayed alongside with the first function f(x) on its left. The line type indicator 40f indicates the line type of the graph in a case where the graph of the first function f(x) is displayed. Similarly, the second function item 212 is shown including a formula of the second function g(x) and a line type indicator 40f displayed alongside with the second function g(x) on its left. The line type indicator 40g indicates the line type of the graph in a case where the graph of the second function g(x) is displayed. Hereinafter, in a case where any one of the line type indicator 40f and the line type indicator 40g is referred to as a line type indicator 40. An indicator representing a unit of an angle (here, "Deg" meaning that the unit is a "degree") is displayed in the sub display area 152.

In Fig. 3, the characters and shapes in the main display area 151 are depicted with smooth lines, but the main display area 151 is a low-resolution display of 63 × 192, and the characters and shapes are displayed with jaggies (stair-like contours) corresponding to the resolution in actual (the same can be said about Figs. 4, 5, 8 to 13).

The user can select one item by operating the enter key 142 or the right direction key of the left and right keys 144 from a state in which a desired item is highlighted among the first function item 211, the second function item 212, and the draw-graph item 213 with the up and down keys 143. The items can be selected in a similar way in a function setting menu screen 22 (see Fig. 4). The display manner to highlight an item may be inversing black and white of an item as shown in Fig. 3, or surrounding an item with a frame.

In a case where the first function item 211 or the second function item 212 is selected, the function setting menu screen 22 shown in Fig. 4 is shown on the display unit 15. On the function setting menu screen 22, a "edit"-function item 221, a "show/hide" setting item 222, a "function type" setting item 223, and a "line style" setting item 224 are shown as menu items in the main display area 151. The edit-function item 221 among these is selected, a function editing screen (not shown in the drawings) for editing and registering the first function f(x) or the second function g(x) is displayed. In the present embodiment, "*f*(*x*) *= x*² - 2" is registered as the first function f(x), *"g*(*x*) = *x"* as the second function g(x) by the user. The formulae of the functions registered are reflected to the first function item 211 and the second function item 212 on the graph menu screen 21 in Fig. 3.

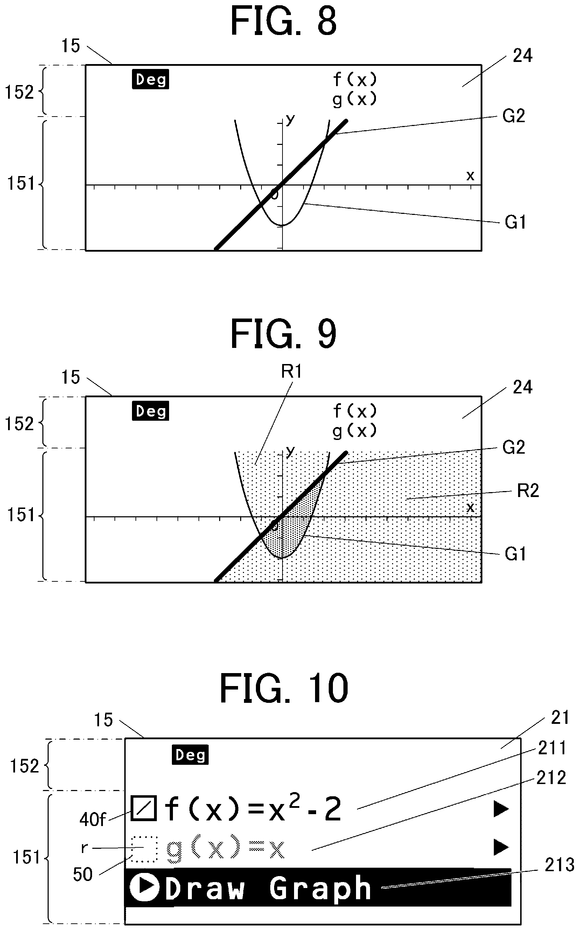

In a case where the show/hide setting item 222 in Fig. 4 is selected, a setting screen (not shown in the drawings) for setting of displayed or hidden of the graph of the function is shown. A function set as "shown" on this setting screen corresponds to a "selected function" which is selected as a target whose graph is to be drawn. A function set as "hidden" on this setting screen corresponds to an "unselected function" which is not selected as a target whose graph is to be drawn. A graph of a selected function is drawn on a graph drawing screen 24 described later (see Fig. 8), and a graph of an unselected function is not drawn on the graph drawing screen 24.

In a case where the function type setting item 223 is selected, a setting screen (not shown in the drawings) for setting of equation/inequality of the function is shown. On this setting screen, the types of the function may be selected from an equation denoted by an equal sign ("=") or an inequality denoted by one of four types of inequality signs (">", "<", "≧", "≦").

In a case where the line type setting item 224 is selected, a line type setting screen 23 shown in Fig. 5 for setting of the line type of the graph is shown on the display unit 15. The line types that can be set in the present embodiment are four types: a first line type of a solid line with a thickness of 1 pixel; a second line type of a solid line with a thickness of 1 pixel; a third line type of a dotted line with a thickness of two pixels; and a fourth line type of a dotted line with a thickness of two pixels. The variety and number of the line types may be appropriately changed according to the application or the like. For example, the line types may be a dashed line, a dashed dotted line, a dashed double-dotted line, or the like. A "first line type" item 231 to a "fourth line type" item 234 for respective settings of the first line type to fourth line type of the graph in the main display area 151 on the line type setting screen 23. A line type indicator 40A representing the first line type is displayed as the "first line type" item 231, a line type indicator 40B representing the second line type as the "second line type" item 232, a line type indicator 40C representing the third line type as the "third line type" item 233, and a line type indicator 40D representing the fourth line type as the "fourth line type" item 234. In a case where one of the first line type item 231 to the fourth line type item 234 is selected (by operating the enter key 142 while it is highlighted), a line type of a graph of a function may be set as the one corresponding to the selected item among the first line type to fourth line type.

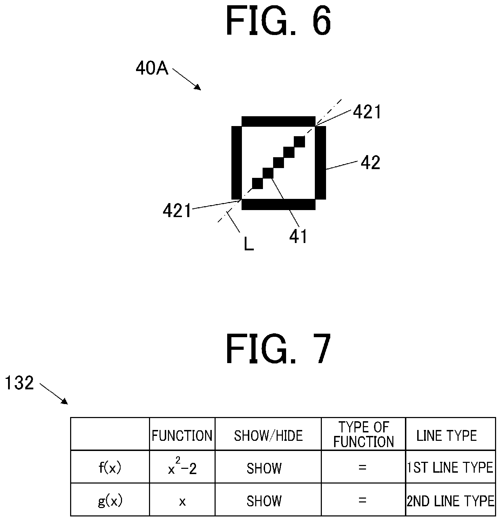

Fig. 6 shows the line type indicator 40A. As shown in Fig. 6, the line type indicator 40A is displayed in an area of vertical 9 pixels by horizontal 9 pixels, for example. This is an area roughly corresponding to one character on the graph menu screen 21. The line type indicator 40A has a line section 41 of the same line type as the graph, and a rectangular shaped frame 42 surrounding the line segment 41. The line segment 41 is positioned on a virtual line connecting opposite vertices 421 of the frame 42. In Fig. 6, the line segment 41 is drawn with 1 dot apart from the opposite vertices 421 on the virtual line L connecting the opposite vertices 421 of the upper right and lower left of the frame 42. The line segment 41 is not limited to this example, and may directly connect the opposite vertices 421. The line segment 41 may be positioned on a virtual line connecting opposite vertices 421 of the upper left and lower right of the frame 42. The direction setting of the line segment 41 may be changeable by a user operation. The shape of the frame 42 is not limited to a rectangle, and may be a polygon other than a rectangle, a circle, or an oval. The line type indicator 40A represents the first line type, and the line segment 41 is drawn in a solid line with a thickness of 1 pixel. Similarly, the line segment 41 of the line type indicator 40B representing the second line type is drawn in a solid line with a thickness of 2 pixels, the line segment 41 of the line type indicator 40C representing the third line type in a dotted line with a thickness of 1 pixel, the line segment 41 of the line type indicator 40D representing the fourth line type in a dotted line with a thickness of 2 pixels. Such designing of the line type indicators 40 can show the line type of the graph in a limited area in the main display area 151 with a low resolution.

The contents of the setting on the setting screen opened from each item on the function setting menu screen 22 in Fig. 4 are stored in the function setting data 132. Fig. 7 shows an example of the contents of the function setting data 132. In the function setting data 132, the setting data on the "function," "show/hide," "function type," and "line type" are registered for each of the first function f(x) and the second function g(x). The "function" is a formula of the function registered on the function editing screen opened from the function setting menu screen 22 in Fig. 4. The "show/hide" is setting of displayed or hidden of the graph set on the setting screen opened from the show/hide setting item 222. The "function type" is a type of function set on the setting menu opened from the function type setting item 223.

The "line type" is a line type set on the line type setting screen 23 opened from the line type setting item 224. The setting of the line type in the function setting data 132 is reflected on the line type indicator 40 shown on the graph menu screen 21 in Fig. 3. That is, the line type indicator 40 representing the set line type is displayed on the left side of each function on the graph menu screen 21. In an example shown in Fig. 3, as the first line type is set for the graph of the first function f(x), the line type indicator 40A (line type indicator 40f) is displayed on the left side of the first function f(x). As the second line type is set for the graph of the second function g(x), the line type indicator 40B (line type indicator 40g) is displayed on the left side of the second function g(x). As described above, the first function f(x) and the line type indicator 40f having the line segment 41 of the same line type as that of the first graph G1 (the line type set for the first graph G1 in the function setting data 132) to be drawn on the basis of the first function f(x) are displayed side by side on the graph menu screen 21 in Fig. 3. As described above, the second function g(x) and the line type indicator 40g having the line segment 41 of the same line type as that of the second graph G2 (the line type set for the second graph G2 in the function setting data 132) to be drawn on the basis of the second function g(x) are displayed side by side on the graph menu screen 21.

In a case where the draw-graph item 213 is selected on the graph menu screen 21 in Fig. 3 (that is, a command input for drawing a graph is received), the graph drawing screen 24 in Fig. 8 is shown on the display unit 15. On the graph drawing screen 24, the x and y axes, the first graph G1 representing the first function f(x), and the second graph G2 representing the second function g(x) are displayed in the main display area 151. The function indicators ("f(x)" and "g(x)" here) representing the functions of the graphs being shown in the main display area 151 are displayed in the sub display area 152 in addition to the indicator of "Deg." The first graph G1 is drawn with the same line type as that of the line segment 41 of the line type indicator 40f (the first line type here) on the graph drawing screen 24. The second graph G2 is drawn with the same line type as that of the line segment 41 of the line type indicator 40g (the second line type here). In other words, the first graph G1 (the second graph G2) is drawn with the line type set in relation to the first function f(x) (the second function g(x)) in the function setting data 132 on the graph drawing screen 24.

In a case where the graph drawing screen 24 is to be shown , the CPU 11 calculates the trajectories of the first function f(x) and the second function g(x) on the xy plane (values of the first function f(x) and the second function g(x) at each position of the x axis), and generates the display image data 121 relating to an image with the first graph G1 and the second graph G2 disposed on the xy coordinate plane. The CPU 11 shows the image in Fig. 5 in the main display area 151 of the display unit 15 by transmitting this display image data 121 to the display unit 15. On the graph drawing screen 24, the first graph G1 and the second graph G2 are both displayed in a black color which is the densest color of the four gradations.

In a case where the first function f(x) and/or the second function g(x) are set as an inequality on the setting screen opened from the function type setting item 223 in Fig. 4, an area specified by the inequality is also displayed on the graph drawing screen 24. On the graph drawing screen 24 shown in Fig. 9, the first function f(x) and the second function g(x) are both set as inequalities. Here, "*f*(*x*) < *x*² - 2" is registered as the first function f(x), and "*g*(*x*) < *x"* is registered as the second function g(x). In Fig. 9, a first function region R1 is colored by disposing dots at a predetermined density in the first function region R1 representing the first function f(x). Dots are disposed at a predetermined density in the second function region R2 representing the second function g(x). The density of disposition of dots in the overlapping region of the first function region R1 and the second function region R2 (dark gray) may be higher than the density of disposition of dots in the region other than the overlapping region (light gray) . Colored with dots at a predetermined density as described above, the first function region R1 and the second function region R2 can be displayed in a manner that allows them to be distinguished from the lines of the first graph G1 and the second graph G2.

Next described is how contents are displayed in a case where one of the first function f(x) and the second function g(x) is set as the unselected function, that is, in a case where it is set as hidden on the setting screen opened from the show/hide setting item 222 in Fig. 4.

Fig. 10 shows one example of the graph menu screen 21 in a case where the second function g(x) is set as the unselected function. Here, the first function f(x) is set as the selected function. In that case, while the first function f(x) as the selected function and the line type indicator 40f corresponding to the first function f(x) are displayed side by side, the region r for displaying the line type indicator 40g in a case where the second function g(x) as the unselected function is reselected as the selected function is left blank as a blank region 50. In Fig. 10, a rectangular dashed line is drawn to show a range of the region r and the blank region 50, but that dashed line is not displayed on the actual graph menu screen 21. And while the first function f(x) as the selected function is displayed in black, the second function g(x) as the unselected function is displayed in a lighter color than the selected function, in dark gray characters here. As described above, the selected function and the unselected function are displayed in manners different from each other on the graph menu screen 21. Since the unselected function can be distinguished as the line type indicator 40 thereof is hidden, the selected function and the unselected function may be displayed in the same manner (for example, both in black) . The display manners of the selected function and the unselected function may be differentiated by a method other than using characters of different colors. For example, the characters of the unselected function may be thinner or smaller than those of the selected function.

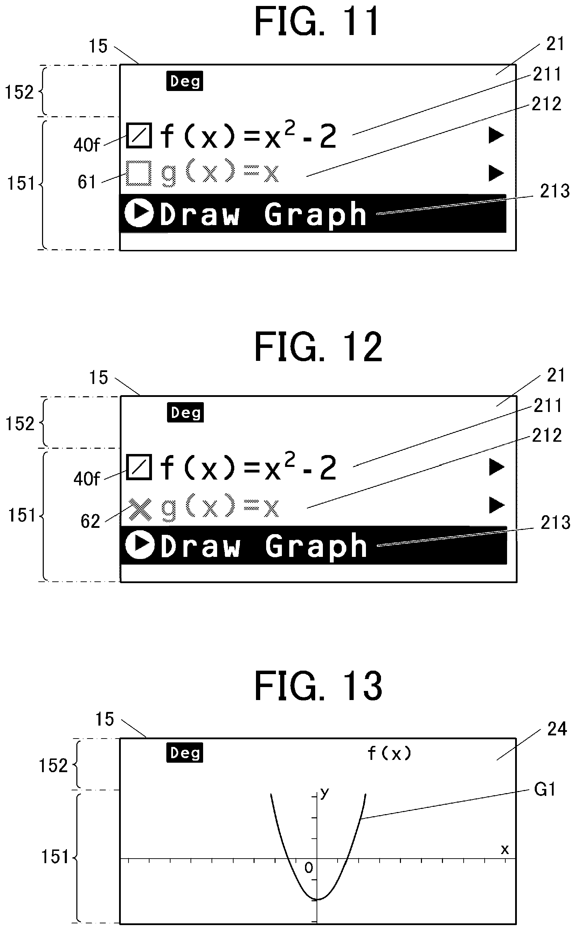

Figs. 11 and 12 show other examples of the graph menu screen 21 in a case where the second function g(x) is set as the unselected function. On the graph menu screen 21 in Fig. 11, a hidden indicator 61 which consists of the frame 42 without the line section 41 is displayed on the left side of the second function g(x) as the unselected function instead of the blank region 50. The hidden indicator 61 corresponds to the line type indicator 40 in Fig. 3, which is displayed in a case where the second function g(x) as the unselected function is reselected as the selected function, and has the frame 42 without the line segment 41. The color of the hidden indicator 61 is the same as that of the second function g(x) (dark gray). On the graph menu 21 in Fig, 12, a hidden indicator 62 in an X shape is displayed on the left side of the second function g(x) as the unselected function instead of the blank region 50. The color of the hidden indicator 62 is the same as that of the second function g(x) (dark gray). As described above, it is possible to show that the graph of the unselected function is not to be displayed as the hidden indicator 61, 62 is displayed in the blank region 50. The indicator for the unselected function is not limited to the unselected indicators 61, 62 and may be other indicators in other forms. The indicators for the unselected function in Figs. 11 and 12 are displayed in the same color as the unselected function, but may be in the same color as the line type indicator 40, or any other color.

In a case where the draw-graph item 213 is selected on one of the graph menu screens 21 in Figs. 10 to 12, the graph drawing screen 24 in Fig. 13 is shown on the display unit 15. On the graph drawing screen 24 in Fig. 13, the first graph G1 of the first function f(x) as the selected function is drawn with the first line type, while the second graph G2 of the second function g(x) as the unselected function is not drawn. The function indicator "f(x)" for the first graph G1 being shown is displayed in the sub display region 152, while the function indicator "g(x)" for the second graph G2 as the unselected graph is not displayed.

In a case where both the first function f(x) and the second function g(x) are the unselected function, these functions are displayed in dark gray characters on the graph menu screen 21. The line type indicator 40 is displayed for neither of them, and the region r for displaying the line type indicator 40 is left blank as the blank region 50. The draw-graph item 213 cannot be selected. The draw-graph item 213 may be displayed in dark gray characters to indicate that it cannot be selected.

In a case where the first function f(x) and/or the second function g(x) is not yet registered, the display region for an unregistered function (that is, the right hand side of the "f(x) =" and/or "g(x)=") is left blank on the graph drawing screen 24. The line type indicator 40 is not displayed for unregistered functions, and the region r for the line type indicator 40 is left blank as the blank region 50. In a case where the first function f(x) and the second function g(x) are both unregistered, the draw-graph item 213 cannot be selected. The draw-graph item 213 may be displayed in characters colored less dense than black such as dark gray to indicate that it cannot be selected.

Next, graph drawing processing executed by the CPU 11 to realize the above-described operations is described.

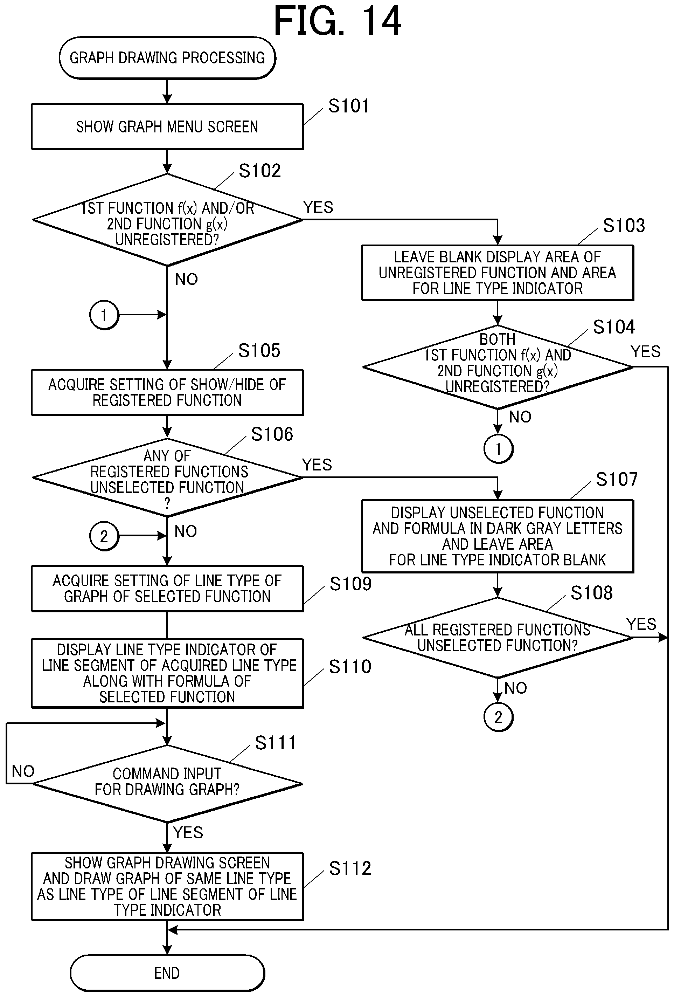

Fig. 14 is a flowchart showing a control procedure of the graph drawing processing. The graph drawing processing is started in a case where the icon of the graph app is selected on the home screen. In a case where the graph drawing processing is started, the CPU 11 shows the graph menu screen 21 on the display unit 15 (Step S101).

The CPU 11 determines whether the first function f(x) and/or the second function g(x) are unregistered or not (Step S102). Here, the CPU 11 refers to the function setting data 132 and determines that a function without a registered "function" is unregistered. In a case where the first function f(x) and/or the second function g(x) is unregistered ("YES" at Step S102), the CPU 11 leaves the display region for displaying a formula of the unregistered function blank and leaves the region r for displaying the line type indicator 40 blank as the blank region 50 (Step S103). In a case where the first function f(x) and the second function g(x) are both unregistered ("YES" at Step S104), the CPU 11 ends the graph drawing processing, and in a case where at least one of the first function f(x) and the second function g(x) is registered ("NO" at Step S104), the CPU 11 proceeds to the Step S105.

The CPU 11 refers to the function setting data 132 and acquires the setting of shown/hidden for the registered function (Step S105). The CPU 11 determines whether there is a function whose graph is set as hidden, that is, whether there is an unselected function (Step S106). In a case where the CPU 11 determines that there is an unselected function ("YES" at Step S106), the CPU 11 displays the formula of the unselected function in dark gray characters, and leaves the region for displaying the line type indicator 40 blank as the blank region 50 (Step S107). In a case where all the registered functions are unselected functions ("YES" at Step S108), the CPU 11 ends the graph drawing processing, and in a case where there is a selected function ("NO" at Step S108), the CPU 11 proceeds to Step S109.

The CPU 11 refers to the function setting data 132 and acquires the line type of the graph of the selected function (Step S109). The CPU 11 displays the line type indicator 40 with the line segment 41 of the acquired line type side by side with the formula of the selected function (Step S110).

The CPU 11 repeatedly determines whether a command input for drawing a graph is received or not (that is, whether a user operation for selecting the draw-graph item 213 on the graph menu screen 21 is done or not) (Step S111). In a case where the CPU 11 determines that the concerning command input is received ("YES" at Step S111), the CPU 11 displays the graph drawing screen 24 on the display unit 15 and draws the graph of the selected function with the same line type as that of the line segment 41 of the line type indicator 40 (Step S112). Specifically, the CPU 11 generates the display image data 121 including the graph of the selected function drawn with the above-described line type, the x and y axes, and the like and sends the display image data 121 to the display unit 15 to display the graph drawn with the aforementioned line type on the graph display screen 24.

After the end of Step S112, the CPU 11 ends the graph drawing processing. Fig.14 is an example of the processing flow of the graph drawing processing, and the flow may be branched to other steps according to the user operation. For example, in a case where a user operation for ending the graph app is input (e.x., a user operation to press the home key 141) at each step in Fig. 14, the CPU 11 may end the graph drawing processing.

As described hereinbefore, the scientific calculator 1 according to the present embodiment includes the CPU 11, and the CPU 11 displays on the display unit 15 a function (the first function f(x) or the second function g(x)) alongside with the line type indicator 40 that includes the line segment 41 of the same line type as that of the graph to be drawn based on the concerning function. This makes it possible to display the function and the line type to be used in a case where the graph of the concerning function is drawn in a limited display space on the display unit 15 with a low resolution for a user to catch information on the function and the line type more intuitively and visually than in conventional techniques. It is thereby possible to prevent the user from displaying a graph with a wrong line type. Thus, the scientific calculator 1 according to the present disclosure can reliably support the user in performing a technical task (showing a graph with a correct line type) by a human-machine interaction. As a technical state of the device (the scientific calculator 1), it is possible to show what kind of line type is used for displaying the graph of the function to be drawn.

The line type indicator 40 includes the frame 42 surrounding the line segment 41. This makes it possible to show that the line segment 41 and the frame 42 constitute the line type indicator 40 as a unity for a user to catch information more intuitively and visually than in conventional techniques.

The line type indicator 40 includes the frame 42 in a rectangular shape and the line segment 41 positioned on the virtual line L connecting the opposite vertices 421 of the frame 42. This makes it possible to prevent the line segment 41 from being confused with other signs such as a minus sign.

In a case where there is a selected function that is selected as a target whose graph is to be drawn among one or more registered functions, the CPU 11 displays the selected function alongside with the line type indicator 40 corresponding to the selected function on the display unit 15. As the line type indicator 40 is displayed in such a manner, a user can intuitively and visually grasp that the graph is drawn based on the function the line type indicator 40 of which is displayed and know the line type of the graph to be drawn.

In a case where there is an unselected function that is not selected as a target whose graph is to be drawn among one or more registered functions, the CPU 11 displays the unselected function on the display unit 15 and leaves blank the region r for displaying the line type indicator 40 in a case where the unselected function is reselected as the selected function as the blank region 50. This makes it possible for a user to intuitively and visually grasp that a graph is not to be drawn of the function for which the line type indicator 40 is not displayed as the blank region 50.

The line type indicator 40 includes the frame 42 surrounding the line segment 41. In a case where there is an unselected function that is not selected as a target whose graph is to be drawn among one or more registered functions, the CPU 11 displays the unselected function on the display unit 15 and displays the frame 42 without the line segment 41 included in the line type indicator 40 which is to be displayed in a case where the unselected function is reselected as the selected function. This makes it possible for a user to intuitively and visually grasp that a graph is not to be drawn of the function for which the frame 42 without the line segment 41 (the hidden indicator 61) is displayed.

The CPU 11 displays the selected function and the unselected function in display manners different from each other. This makes it possible for a user to intuitively and visually distinguish between the selected function and the unselected function. As a color density as a display manner is differentiated, a user who cannot see color differences can appropriately distinguish between the selected function and the unselected function.

In a case where a command input for drawing a graph representing the function (a user operation for selecting the draw-graph item 213) is received while the function is displayed alongside with the line type indicator 40, the CPU 11 draws the graph with the same line type as that of the line segment 41 included in the line type indicator 40. This makes it possible to give a command for a start of drawing graph while checking the line type of the graph to be drawn with the line segment 41 of the line type indicator 40.

The display control method executed by the CPU 11 according to the present embodiment includes displaying on the display unit 15 the function alongside with the line type indicator 40 including the line segment 41 same as the line segment of the graph to be drawn on the basis of the concerning function. This makes it possible to display the function and the line type of the graph of the concerning function to be drawn for a user to catch information on the function and the line type more intuitively and visually than in conventional techniques.

The storage medium 13 according to the present embodiment is a non-transitory storage medium storing the program 131 that can be read by the CPU 11 as a computer. The program 131 causes the CPU 11 to execute processing for displaying on the display unit 15 the function and the line type indicator 40 including the lie segment 41 same as that of the graph to be drawn based on the function. This makes it possible to display the function and the line type of the graph of the concerning function to be drawn for a user to catch information on the function and the line type more intuitively and visually than in conventional techniques.

The present disclosure is not limited to the embodiments described hereinbefore, and various changes can be made thereto. For example, the scientific calculator 1 is an example of the electronic device in the above embodiments, but the present disclosure is not limited thereto. The electronic device may be any device as long as it can display multiple graphs on its display unit, and may be a smartphone, a tablet, a learning terminal, or the like.

In the above embodiments, the two graphs corresponding to the two functions are shown on the display unit 15, but three or more graphs representing three or more functions may be displayed on the display unit 15.

The position of the line type indicator 40 is not limited to the left side of the formula of the function, and may be any position along with the formula of the function.

At least the line segment 41 is to be included in the line type indicator 40, and the frame 42 may be omitted, for example. That is, the line type indicator 40 may consist of the line segment 41 only. The line type indicator 40 may include an element not exemplified in the above embodiments.

The CPU 11 may determine whether the registered function includes an error that makes it impossible to draw a graph of the function, and in a case where the CPU 11 determines that the function includes such an error, the CPU 11 may display an error (for example, display of characters "ERROR") instead of the formula of the function in the first function item 211 or the second function item 212 on the graph menu screen 21. The line type indicator 40 is not displayed for the function with an error, and a graph of the function is not drawn.

In the above description, a flash memory of the storage unit 13 is used as the computer-readable storage medium for the program according to the present disclosure as an example, but the present disclosure is not limited to this example. Other storage media such as a hard disk drive (HDD), a solid-state drive (SSD), and a CD-ROM can be applied as the computer-readable medium. A carrier wave may be applied to this disclosure as the medium that provides the program data concerning the present disclosure via the communication lines.

The detailed configurations and operations of the components of the scientific calculator 1 can also be appropriately modified without departing from the scope of the present disclosure.

Although the embodiments of the present disclosure have been described above, the technical scope of the disclosure is not limited to the embodiments described above, but is defined based on the scope of the claims and its equivalents.

## Claims

1. An electronic device (1) comprising:
a controller,
wherein the controller (11) displays on a display (15) a function alongside with an indicator (40) that includes a line segment (41) of a line type same as a line type of a graph (G1, G2) drawn based on the function.

2. The electronic device according to claim 1,
wherein the indicator includes a frame (42) surrounding the line segment.

3. The electronic device according to claim 2,
wherein the indicator includes the frame in a rectangular shape and the line segment positioned on a virtual line connecting opposite vertices (421) of the frame.

4. The electronic device according to claim 1,
wherein the function includes one or more functions,
wherein, in a case where there is a selected function that is selected as a target whose graph is to be drawn among the one or more functions registered, the controller displays the selected function alongside with the indicator corresponding to the selected function on the display.

5. The electronic device according to claim 4,
wherein in a case where there is an unselected function that is not selected as the target whose graph is to be drawn among the one or more functions registered, the controller displays the unselected function on the display and leaves blank a region which is for displaying the indicator in a case where the unselected function is reselected as the selected function.

6. The electronic device according to claim 4,
wherein the indicator includes a frame (42) surrounding the line segment,
wherein in a case where there is an unselected function that is not selected as the target whose graph is to be drawn among the one or more functions registered, the controller displays the unselected function on the display and displays the frame without the line segment included in the indicator which is to be displayed in a case where the unselected function is reselected as the selected function.

7. The electronic device according to claim 5,
wherein the controller displays the selected function and the unselected function in display manners different from each other.

8. The electronic device according to claim 1,
wherein in a case where a command input for drawing a graph (G1, G2) representing the function is received while the function is displayed alongside with the indicator, the controller draws the graph with the line type same as the line type of the line segment included in the indicator.

9. A display control method comprising:
displaying on a display (15) a function alongside with an indicator (40) that includes a line segment of a line type same as a line type of a graph (G1, G2) drawn based on the function.

10. A program (131) executed by a computer of an electronic device (1),
wherein the program executes processing of:
displaying on a display (15) a function alongside with an indicator (40) that includes a line segment (41) of a line type same as a line type of a graph (G1, G2) drawn based on the function.
